# EUROPEAN PATENT SPECIFICATION

(11) **EP 4 055 460 B1**
(45) Date of publication and mention of the grant of the patent: **10.01.2024**
(21) Application number: 20801218.7
(22) Date of filing: 03.11.2020
(51) Int. Cl.: G05D 1/02, G08G 1/01

(54) **METHOD AND SYSTEM FOR CONTROLLING VEHICLE**
VERFAHREN UND SYSTEM ZUR STEUERUNG EINES FAHRZEUGS
PROCÉDÉ ET SYSTÈME DE COMMANDE DE VÉHICULE

(30) Priority: 04.11.2019 CN 201911065446
(43) Date of publication of application: 14.09.2022
(73) Proprietor: VOLKSWAGEN AKTIENGESELLSCHAFT, 38440 Wolfsburg (DE)
(72) Inventor: CAI, Jiyong, Beijing, China 100015 (CN)
(86) International application number: PCT/EP2020/080845
(87) International publication number: WO 2021/089567

(56) References cited:
- CN-A- 108 922 188
- KR-A- 20190 104 474

## Description

The present invention relates to a method and system for controlling a vehicle, and an onboard automatic driving system.

A motor vehicle automatic driving system is an intelligent motor vehicle system for realizing unmanned driving by means of an onboard computer system; it relies on the cooperation of artificial intelligence, visual computation, radar, monitoring apparatuses and a global positioning system, enabling a computer to operate a motor vehicle automatically and safely without any active human operation. A motor vehicle automatic driving system generally comprises apparatuses such as a video camera, a radar sensor and a laser rangefinder, which are used to learn the surrounding traffic situation, and navigates the road ahead by means of a map. Motor vehicle automatic driving technology is continuously developing and is now showing a trend towards practical use. However, at present, an automatic driving strategy based on detection of the surrounding traffic situation has placed very high requirements on the detection ability and computing ability of driverless vehicles. For example, laser radar for detecting real-time surrounding environment information is expensive, and the amount of collected data relating to real-time surrounding environment information can reach several hundred MB per second, and needs to be processed in real time by the onboard computer system. In addition, the onboard computer system also needs to receive, and process in real time, signals collected by monitoring apparatuses such as ultrasonic radar, millimetre wave radar and a high-definition camera; this requires the onboard computer system to have powerful data processing ability, to ensure that the vehicle is controlled in real time. This results in the driverless vehicle having a very high technological threshold; the manufacturing and maintenance costs of the onboard automatic driving system are both also very high.

KR 2019 0104474 A discloses a method for controlling an apparatus for controlling driving of a vehicle. Approaching vehicles located in a predetermined distance with respect to a host vehicle are checked and at least one of driving environment information comprising vehicle information of the host vehicle and road traffic information, vehicle information of a preceding vehicle located in front of the host vehicle among the approaching vehicles, or vehicle information of a following vehicle located behind the host vehicle is acquired. The host vehicle is then controlled in an adaptive cruise mode so that a distance between the host vehicle and the preceding vehicle or the following vehicle is maintained within a predetermined distance based on the driving environment information of the host vehicle and the vehicle information of the preceding vehicle or the following vehicle. The host vehicle is controlled in an adaptive avoidance mode when the distance between the host vehicle and the preceding vehicle, or the distance between the host vehicle and the following vehicle, is not maintained within the predetermined distance.

CN 108922188 A discloses a four-dimensional live-action traffic road condition perceiving and early-warning monitoring management system, which is based on radar tracking and positioning. The system fuses a tracking and positioning technology, a license plate capturing technology, a vehicle and pedestrian three-dimensional simulation technology, a road monitoring technology, an early-warning and alarming technology, a traffic condition simulation technology, a network communication technology, a meteorological simulation technology, a computer graphic technology, a video rendering technology, a three-dimensional high-precision map technology, a virtual reality fusion technology, a vehicle-road collaborative technology, and a navigation technology.

An object of the present invention is to provide a method and system for controlling a vehicle for at least partially overcoming the shortcomings in the prior art.

The invention is as set out in the appended independent claims. Advantageous refinements are defined in the dependent claims.

An embodiment of the present invention provides a method for controlling a vehicle, comprising: a cloud server performing three-dimensional simulation of an actual travelling situation of a vehicle in a predetermined area range according to information of a controlled vehicle and information of a surrounding vehicle collected in real time; the cloud server generating control information relating to a simulated advance decision of the controlled vehicle according to the three-dimensionally simulated vehicle travelling situation; and sending the control information to an onboard automatic driving system of the controlled vehicle, to synchronously control the controlled vehicle to travel according to the control information sent.

The present invention can lower the technological threshold of automatically driven vehicles as well as the manufacturing and maintenance costs of the onboard automatic driving system, and can also optimize an advance decision for the vehicle on the basis of the actual surrounding road situation.

An embodiment of the present invention further provides a system for controlling a vehicle, comprising: a cloud server, configured to perform three-dimensional simulation of an actual travelling situation of a vehicle in a predetermined area range according to information of a controlled vehicle and information of a surrounding vehicle collected in real time; and generate control information relating to a simulated advance decision of the controlled vehicle according to the three-dimensionally simulated vehicle travelling situation; and send the control information to an onboard automatic driving system of the controlled vehicle, to synchronously control the controlled vehicle to travel according to the control information sent.

Using the method and system for controlling a vehicle, that are provided in embodiments of the present invention, it is not only possible to lower the technological threshold of automatically driven vehicles and considerably reduce the manufacturing and maintenance costs of the onboard automatic driving system, but also possible to optimize an advance decision for the controlled vehicle on the basis of the actual surrounding road situation.

Embodiments of the present invention are explained further below in conjunction with the drawings.
Fig. 1 is a flow chart of the method for controlling a vehicle according to an embodiment of the present invention.
Fig. 2 is a block diagram of the system for controlling a vehicle according to an embodiment of the present invention.
Fig. 3 is a block diagram of an onboard automatic driving system.

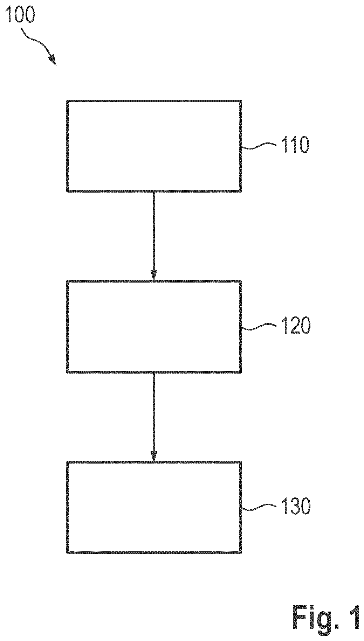

Fig. 1 shows a flow chart of a method 100 for vehicle automatic driving according to an embodiment of the present invention. The method 100 comprises: a cloud server performing 110 three-dimensional simulation of an actual travelling situation of a vehicle in a predetermined area range according to information of a controlled vehicle and information of a surrounding vehicle collected in real time; the cloud server generating 120 control information relating to a simulated advance decision of the controlled vehicle according to the three-dimensionally simulated vehicle travelling situation; and sending 130 the control information to an onboard automatic driving system of the controlled vehicle, to synchronously control the controlled vehicle to travel according to the control information sent.

This kind of synchronously sent control information may be sent to the controlled vehicle by the cloud server via a repeater or sent to the controlled vehicle directly by the cloud server. In an embodiment of the present invention, the control information comprises at least one of controlled vehicle speed, position and direction information generated during three-dimensional simulation. Using the control information, it is possible to control the controlled vehicle to complete various control actions on an actual road, e.g., parking and waiting, decelerating or accelerating, changing lane, overtaking, changing gear, cornering and selecting a route of travel, etc.

The cloud server has characteristics such as being highly distributed and highly virtualized, such that network resources are utilized fully, and therefore has powerful data storage and data processing ability, far superior to that of a data processing unit of an ordinary onboard automatic driving system.

In one embodiment of the present invention, the step of performing 110 three-dimensional simulation of an actual travelling situation of a vehicle in a predetermined area range may comprise: performing three-dimensional simulation of an actual travelling situation of a vehicle and a road in a predetermined area range; and controlling simulated advance of a three-dimensional model of a controlled vehicle on a simulated road. The cloud server may call position information of a repeater and vehicle information uploaded by the repeater, perform three-dimensional simulation of an actual situation of the road within a certain distance (e.g., 500 metres) in front of and behind the repeater, and cause simulated advance of the three-dimensional model of the automatically driven controlled vehicle on the simulated road. During simulation, simulated controlled vehicle speed, position and direction information is synchronized to the controlled vehicle travelling on the road, such that the controlled vehicle travels according to a simulated state. Using the method of this embodiment, all automatically driven vehicles on the road can be controlled to travel according to the simulated state thereof.

In one embodiment of the present invention, the step of performing 110 three-dimensional simulation of an actual travelling situation of a vehicle in a predetermined area range may further comprise: presenting a running path of relative movement of the vehicle on a road in the form of a dynamic image.

In one embodiment of the present invention, the step of controlling simulated advance of a three-dimensional model of a controlled vehicle on a simulated road comprises: determining an overall traffic volume of a road according to a three-dimensionally simulated actual road situation, and correspondingly controlling a travelling speed of the controlled vehicle and/or planning a travelling route of the controlled vehicle; control information for travel of the controlled vehicle can thereby be correspondingly generated.

In one embodiment of the present invention, multiple repeaters distributed at the roadside collect information of the controlled vehicle and information of surrounding vehicles, and the collected information is uploaded to the cloud server from the repeaters.

Each repeater has a geographical position information tag, containing information thereof such as longitude, latitude and absolute height above sea level. Each repeater may monitor in real time an actual situation of a road within a range of 200 to 500 metres in the vicinity for example, and receive in real time vehicle position and vehicle three-dimensional information (including three-dimensional size information of the vehicle), direction and speed information of all vehicles within a range of 500 metres for example. The repeater may use a manner of communication based on a honeycomb network, and a communication standard thereof may use a C-V2X protocol. For example, the repeater may transmit information such as vehicle position, vehicle three-dimensional information, direction and speed within a range of (optionally) 500 metres at a specific time point to the cloud server. The information of all repeaters at the specific time point is pieced together at the server to form a complete road and a real-time vehicle running situation on the road. Let the specific time point be T1; then the next time point at a specific interval is T2, and so on to give T3, T4, ...Tn. Since geographical position information of the repeater is generally fixed, when information of T1 to Tn is summed, and presented sequentially in digital form, what is presented is a running path of a vehicle on a specific road within a specific time.

This kind of running path may be presented in the form of a dynamic image or presented in another non-specific data combination form. In the presentation, since the geographical position information transmitted by the repeater does not change, a three-dimensional data image of the vehicle is shown as movement relative to the road.

Since the geographical position information of the repeater and the vehicle three-dimensional information are nearly constant, an amount of data which the repeater needs to update for the cloud server at a specific time point only comprises vehicle position, direction and speed information; the amount of data transmitted is very small (at the KB level), but efficiency is very high in terms of positioning precision and the determination of a positional relationship between vehicles and between a vehicle and the surrounding environment, and the computing ability requirement for a single vehicle is very low. This makes positioning by the onboard automatic driving system highly precise, low-cost and highly reliable.

In one embodiment of the present invention, the step of collecting vehicle information comprises: multiple repeaters receiving controlled vehicle information from the controlled vehicle within multiple different area ranges, and receiving surrounding vehicle information from surrounding vehicles; wherein the controlled vehicle information at least comprises speed, position, travelling direction and destination information, and vehicle three-dimensional information, of the controlled vehicle; the surrounding vehicle information at least comprises position, direction and speed information, and vehicle three-dimensional information, of other vehicles in a predetermined surrounding range of the controlled vehicle.

Information transmission among the cloud server, repeaters and vehicles may employ an information exchange package of an agreed standard in a traffic system. Information uploaded to the cloud server by the repeater includes but is not limited to vehicle position, speed, direction, objective and vehicle three-dimensional information. In an embodiment of the present invention, the use of the technology of standard settings of such information and active broadcast of information to the repeater by the vehicle helps to significantly reduce the amount of computation of an onboard data processing unit and the amount of network information transmitted, as compared with a technology in which the vehicle relies on environmental data information sensed by various detection and sensing apparatuses provided on the vehicle itself and network communication (e.g. the Internet of Vehicles) and performs data processing to accomplish automatic driving control.

In an embodiment of the present invention, the collection and processing of a large amount of environmental data information is carried out by the repeater and the cloud server; consequently, the vehicle need not be provided with various expensive high-precision detection and sensing apparatuses, and the onboard automatic driving system thereof need not be provided with a high-performance, high-speed data processing unit. It is thereby possible to lower the technological threshold of the automatically driven vehicle and lower the manufacturing and maintenance costs of the onboard automatic driving system.

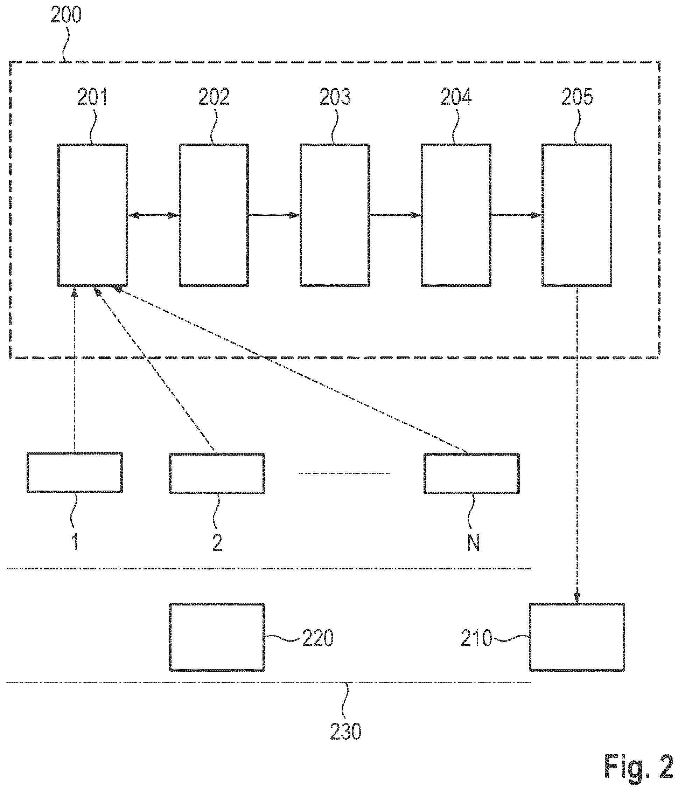

Fig. 2 shows a block diagram of a system for controlling a vehicle according to an embodiment of the present invention. The system comprises: multiple repeaters 1, 2, ..., N, distributed at multiple different positions at the side of a road 230, and configured to collect information of a controlled vehicle 210 and information of at least one surrounding vehicle 220 thereof, and upload the collected information to a cloud server 200; and the cloud server 200, configured to perform three-dimensional simulation of an actual travelling situation of a vehicle (e.g. including the controlled vehicle 210 and associated surrounding vehicle 220) in a predetermined area range according to the information of the controlled vehicle 210 and the information of the surrounding vehicle 220 collected in real time; and generate control information relating to a simulated advance decision of the controlled vehicle 210 according to the three-dimensionally simulated vehicle travelling situation; and send the generated control information to an onboard automatic driving system of the controlled vehicle 210, to synchronously control the controlled vehicle 210 to travel according to the control information sent.

In an embodiment of the present invention, the cloud server 200 is further configured to perform three-dimensional simulation of an actual travelling situation of a vehicle and a road in a predetermined area range; and control simulated advance of a three-dimensional model of a controlled vehicle on a simulated road.

In an embodiment of the present invention, the cloud server 200 is further configured to determine an overall traffic volume of a road according to a three-dimensionally simulated actual road situation, and correspondingly control a travelling speed of the controlled vehicle and/or plan a travelling route of the controlled vehicle.

In an embodiment of the present invention, the cloud server 200 is further configured to present a running path of relative movement of the vehicle on a road in the form of a dynamic image.

In an embodiment of the present invention, the system for controlling a vehicle of the present invention further comprises multiple repeaters 1, 2, ..., N, distributed at multiple different positions at the side of a road 230, and configured to collect information of a controlled vehicle 210 and information of at least one surrounding vehicle 220 thereof, and upload the collected information to a cloud server 200.

In an embodiment of the present invention, as shown in Fig. 2, the cloud server 200 comprises: an information receiving module 201, configured to communicate with the multiple repeaters 1, 2, ..., N, and receive the information collected and uploaded by the multiple repeaters 1, 2, ..., N; a data processing module 202, configured to process and compute the information received by the information receiving module 201; a data presentation module 203, configured to present the information processed by the data processing module 202, to perform three-dimensional simulation of a road and an actual road situation in a predetermined surrounding range; a decision module 204, configured to generate control information relating to a simulated advance decision of the controlled vehicle 210 according to a three-dimensionally simulated actual road situation; and a data sending module 205, configured to send the control information to the onboard automatic driving system of the controlled vehicle 210, to synchronously control the controlled vehicle 210 to travel according to the control information sent. The decision module 204 may determine an overall traffic volume of a road according to a three-dimensionally simulated actual road situation, and correspondingly control a travelling speed of the controlled vehicle 210 and/or plan a travelling route of the controlled vehicle 210.

When all vehicles 210, 220 on all roads are subjected to automatic driving control according to the method embodiments of the present invention, this will make the running of road traffic as a whole more effective and quick and eliminate traffic jam states quickly. In an embodiment of the present invention, three-dimensional simulation by the cloud server 200 can replace dynamic detection of surrounding traffic participants by the onboard automatic driving system and tracking of dynamic change of the present vehicle and another vehicle. The decision module 204 has an obvious advantage over the prior art in terms of the planning of route and travelling speed of a single vehicle according to the overall flow rate of a road. The cloud server 200, based on gathering of information uploaded by the repeaters, can perform integrated simulation of current positions and target positions of all vehicles on the road and the traffic volume of the road, and set an optimal speed and travelling path for each vehicle in real time with high efficiency.

In an embodiment of the present invention, the data presentation module 203 is further configured to present a running path of relative movement of the vehicle (e.g. including the controlled vehicle 210 and associated surrounding vehicle 220) on the road 230 in the form of a dynamic image, to make it easier for traffic control personnel to learn the actual road situation in a visually direct manner. Traffic control personnel can send specific driving control information to the controlled vehicle 210 by means of the data sending module 205 according to an emergency.

In an embodiment of the present invention, the system for controlling a vehicle of the present invention further comprises multiple pressure sensors. These pressure sensors are disposed on the road and configure to measure the positions of vehicles travelling on the road. The multiple pressure sensors may be connected to at least one of the multiple repeaters and transmit position information of the vehicles measured to the cloud server 200 via the repeater. These pressure sensors are laid on the road at specific intervals and used to measure accurate positions of the vehicles 210, 220, to serve as calibration of vehicle position information sent by the vehicles 210, 220. The pressure sensors are in general physically connected to repeaters near them, to send information of precise positions (the error in position thereof may be as low as 1 cm) of the vehicles measured to the cloud server via the repeaters, to accomplish the calibration of vehicle positions. Pressure sensors connected to two adjacent repeaters can realize seamless detection of the road.

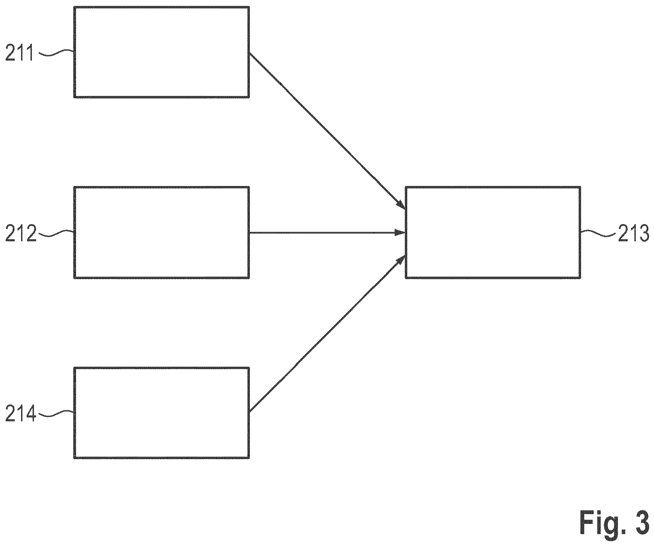

Fig. 3 shows a block diagram of an onboard automatic driving system. The onboard automatic driving system comprises: a detection and sensing apparatus 211, configured to detect travelling state information of the present vehicle and a surrounding vehicle thereof; a remote communication interface 212, configured to receive control information relating to an advance decision of the vehicle from a cloud server; wherein the control information at least comprises vehicle speed, position and direction information; and a handling module 213, configured to synchronously control the travelling of the vehicle at least partially on the basis of information detected by the detection and sensing apparatus 211 and/or the control information received by the remote communication interface 212. Detection and sensing apparatuses 211 include but are not limited to laser radar, ultrasonic radar, millimetre wave radar, a high-definition camera, a global positioning system (GPS), a speedometer and accelerometer, and various onboard sensors.

In an embodiment, a priority level, for controlling the vehicle, of control information received from the cloud server 200 may be set to be higher or lower, according to driving needs (e.g. according to road conditions or the weather situation), than a control priority level of a handling instruction generated by the onboard automatic driving system according to a vehicle running state and/or an actual road situation collected by the onboard detection and sensing apparatus. The priority level, for controlling the vehicle, of control information received from the cloud server 200 may also be set to be lower than a control priority level of a handling instruction issued by a driver; for example, once the driver begins to control a car, the authority to control the car will be assumed by the driver, and control information received from the cloud server 200 will no longer control the vehicle.

In an embodiment, the onboard automatic driving system may comprise a human control command inlet, an onboard controller command inlet and a cloud synchronous command inlet, which may for example be used to respectively receive a driver handling instruction, a handling instruction generated by the onboard automatic driving system according to an actual road situation collected by the onboard detection and sensing apparatus and/or a vehicle-vehicle communication interface, and a control instruction sent synchronously from the cloud server.

In an embodiment, the onboard remote communication interface 212 is further configured to send vehicle information to a repeater; the vehicle information at least comprises vehicle speed, position, travelling direction and destination information, and vehicle three-dimensional information. The vehicle three-dimensional information is substantially constant; the other information needs to be constantly updated. The remote communication interface 212 may send a standard information package to the outside in real time, to announce position, speed, direction and vehicle 3D information of the present vehicle. If every vehicle is set to abide by this rule for information release, then the road situation is completely transparent to all vehicles, clouds and repeaters.

In an embodiment, the onboard automatic driving system shown in Fig. 3 may further comprise a vehicle-vehicle communication interface 214, which is used for exchanging information directly with a surrounding vehicle, and may also receive speed, position, travelling direction and destination information, and vehicle three-dimensional information, relating to the surrounding vehicle. Using information (e.g. travelling state information and vehicle three-dimensional size information, etc.) of the surrounding vehicle of the present vehicle detected by the detection and sensing apparatus 211, it is possible to verify whether information relating to the surrounding vehicle received via the vehicle-vehicle communication interface 214 and information relating to the surrounding vehicle received from the repeater or cloud server conform to the current actual situation.

In an embodiment of the present invention, since the geographical position information of the repeater and the vehicle three-dimensional information are nearly constant, an amount of data which the repeater needs to update for the cloud server at a specific time point only comprises vehicle position, direction and speed information; the amount of data transmitted is very small (at the KB level), but efficiency is very high in terms of positioning precision and the determination of a positional relationship between vehicles and between a vehicle and the surrounding environment, and the computing ability requirement for a single vehicle is very low. This makes positioning by the onboard automatic driving system highly precise, low-cost and highly reliable.

In an embodiment of the present invention, the cloud server may undertake the task of processing a large amount of collected data information and can thereby reduce the amount of computation and the amount of information exchange that is undertaken by the onboard automatic driving system. For example, the main task of onboard laser radar is to monitor variation in surrounding traffic participants in real time. When all traffic participants actively exchange information with roadside repeaters, and all traffic participants can obtain gathered feedback information, an information integration function of the cloud server can replace a detection function of laser radar. This means that expensive high-performance laser radar, ultrasonic radar, millimetre wave radar or high-definition cameras, etc. need not be installed on the vehicle, and it is thereby possible to make huge savings in terms of material costs and computing resources, as well as reduce the energy consumption of the onboard automatic driving system.

Those skilled in the art should understand that the embodiments described above are merely illustrative, not limiting; those skilled in the art could make various changes and amendments without deviating from the substance of the present invention, all of which changes and amendments should fall within the scope of protection of the present invention.

## Claims

1. A method for controlling a vehicle (210), comprising:
performing (110), by a cloud server (200), a three-dimensional simulation on actual driving conditions of vehicles (210, 220) within a predetermined area based on real-time collected information of a controlled vehicle (210) and information of surrounding vehicles (220), wherein the information of the controlled vehicle (210) and the information of the surrounding vehicles (220) is received from the controlled vehicle (210) and the surrounding vehicles (220), respectively, by a plurality of repeaters (1, 2,..., N) distributed along a road (230), and uploaded from the repeaters (1, 2,..., N) to the cloud server (200), wherein the information of the controlled vehicle (210) includes at least speed, vehicle location, driving direction and
destination information, as well as the three-dimensional information of the controlled vehicle (210), and the information of said surrounding vehicles (220) includes at least vehicle location, driving direction, and speed information of said surrounding vehicles (220) within a predetermined area of the controlled vehicle (210), as well as the three-dimensional information of said surrounding vehicles (220);
generating (120), by the cloud server (200), control information for decisions in driving simulation on the controlled vehicle (210) according to the three-dimensional simulation on the driving condition of the vehicles (210, 220); and
sending (130) the control information to an on-board automatic driving system of the controlled vehicle (210) to synchronously control the controlled vehicle (210) to drive according to the sent control information.

2. The method of claim 1, wherein the control information includes at least one type of information of vehicle speed, vehicle location, and driving direction of the controlled vehicle (210) generated during the three-dimensional simulation.

3. The method of claim 1, wherein performing (110) the three-dimensional simulation comprises:
performing a three-dimensional simulation on the actual road condition and the driving condition of vehicles (210, 220) within the predetermined area; and
controlling the three-dimensional model of the controlled vehicle (210) to drive on a simulated road.

4. The method of claim 3, wherein controlling the three-dimensional model of the controlled vehicle (210) to drive on a simulated road comprises:
determining an overall traffic volume of the road (230) according to the three-dimensional simulation of the actual road condition, and controlling a driving speed of the controlled vehicle (210) and/or planning a driving route of the controlled vehicle (210).

5. The method of any of claims 1-4, wherein performing (110) the three-dimensional simulation also comprises:
presenting the relative moving track on the road (230) of the vehicles (210, 220) in the form of a dynamic image.

6. A system for controlling a vehicle, comprising:
a cloud server (200), which is configured to perform (110) a three-dimensional simulation on actual driving conditions of vehicles (210, 220) in a predetermined area based on real-time collected information of a controlled vehicle (210) and information of surrounding vehicles (220), wherein the information of the controlled vehicle (210) and the information of the surrounding vehicles (220) is received from the controlled vehicle (210) and the surrounding vehicles (220), respectively, by a plurality of repeaters (1, 2,..., N) distributed along a road (230), and uploaded from the repeaters (1, 2,..., N) to the cloud server (200), wherein the information of the controlled vehicle (210) includes at least speed, vehicle location, driving direction and destination information, as well as the three-dimensional information of the controlled vehicle (210), and the information of said surrounding vehicles (220) includes at least vehicle location, driving direction, and speed information of said surrounding vehicles (220) within a predetermined area of the controlled vehicle (210), as well as the three-dimensional information of said surrounding vehicles (220); to generate (120) control information for decisions in driving simulation on the controlled vehicle (210) according to the three-dimensional simulation on the driving condition of the vehicles (210, 220); and to send (130) the control information to an on-board automatic driving system of the controlled vehicle (210) to synchronously control the controlled vehicle (210) to drive according to the sent control information.

7. The system of claim 6, wherein the control information includes at least one type of information of vehicle speed, vehicle location, and driving direction of the controlled vehicle generated during the three-dimensional simulation.

8. The system of claim 6, wherein the cloud server (200) is further configured to perform a three-dimensional simulation on the actual road condition and the driving condition of vehicles (210, 220) within the predetermined area, and to control the three-dimensional model of the controlled vehicle (210) to drive on a simulated road.

9. The system of claim 8, wherein the cloud server (200) is further configured to determine an overall traffic volume of the road (230) according to the three-dimensional simulation of the actual road condition, and to control a driving speed of the controlled vehicle (210) and/or to plan a driving route of the controlled vehicle (210).

10. The system of any of claims 6-9, wherein the cloud server (200) is further configured to present the relative moving track on the road (230) of the vehicles (210, 220) in the form of a dynamic image.

11. The system of claim 6, also comprising:
a plurality of pressure sensors, which are positioned on the road (230) and are configured to measure the locations of vehicles driving (210, 220) on the road (230), wherein
the plurality of pressure sensors are connected to at least one of the repeaters (1, 2,..., N), and the measured location information of the vehicles (210, 220) is transmitted to the cloud server (200) through the repeaters (1, 2,..., N).

## Patentansprüche

1. Verfahren zum Steuern eines Fahrzeugs (210), das Folgendes umfasst:
Durchführen (110) einer dreidimensionalen Simulation an tatsächlichen Fahrbedingungen von Fahrzeugen (210, 220) in einem vorbestimmten Bereich durch einen Cloudserver (200) auf Basis von in Echtzeit gesammelten Informationen eines gesteuerten Fahrzeugs (210) und Informationen von umgebenden Fahrzeugen (220), wobei die Informationen des gesteuerten Fahrzeugs (210) und die Informationen der umgebenden Fahrzeuge (220) von einer Vielzahl von Repeatern (1, 2,..., N), die entlang einer Straße (230) verteilt sind, vom gesteuerten Fahrzeug (210) bzw. von den umgebenden Fahrzeugen (220) empfangen und von den Repeatern (1, 2,..., N) zum Cloudserver (200) hochgeladen werden, wobei die Informationen des gesteuerten Fahrzeugs (210) mindestens Informationen zu Geschwindigkeit, Fahrzeugort, Fahrtrichtung und Ziel sowie die dreidimensionalen Informationen des gesteuerten Fahrzeugs (210) beinhalten und die Informationen der umgebenden Fahrzeuge (220) mindestens Informationen zu Fahrzeugort, Fahrtrichtung und Geschwindigkeit der umgebenden Fahrzeuge (220) in einem vorbestimmten Bereich des gesteuerten Fahrzeugs (210) sowie die dreidimensionalen Informationen der umgebenden Fahrzeuge (220) beinhalten;
Erzeugen (120) von Steuerinformationen für Entscheidungen bei einer Fahrsimulation am gesteuerten Fahrzeug (210) durch den Cloudserver (200) gemäß der dreidimensionalen Simulation an der Fahrbedingung der Fahrzeuge (210, 220) und
Senden (130) der Steuerinformationen an ein fahrzeuginternes automatisches Fahrsystem des gesteuerten Fahrzeugs (210), um das gesteuerte Fahrzeug (210) synchron zu steuern, um gemäß den gesendeten Steuerinformationen zu fahren.

2. Verfahren nach Anspruch 1, wobei die Steuerinformationen mindestens eine Art von Informationen von Fahrzeuggeschwindigkeit, Fahrzeugort und Fahrtrichtung des gesteuerten Fahrzeugs (210) beinhalten, die während der dreidimensionalen Simulation erzeugt werden.

3. Verfahren nach Anspruch 1, wobei das Durchführen (110) der dreidimensionalen Simulation Folgendes umfasst:
Durchführen einer dreidimensionalen Simulation an der tatsächlichen Straßenbedingung und der Fahrbedingung von Fahrzeugen (210, 220) im vorbestimmten Bereich und
Steuern des dreidimensionalen Modells des gesteuerten Fahrzeugs (210), um auf einer simulierten Straße zu fahren.

4. Verfahren nach Anspruch 3, wobei das Steuern des dreidimensionalen Modells des gesteuerten Fahrzeugs (210), um auf einer simulierten Straße zu fahren, Folgendes umfasst:
Bestimmen eines gesamten Verkehrsvolumens der Straße (230) gemäß der dreidimensionalen Simulation der tatsächlichen Straßenbedingung und Steuern einer Fahrgeschwindigkeit des gesteuerten Fahrzeugs (210) und/oder Planen einer Fahrtroute des gesteuerten Fahrzeugs (210).

5. Verfahren nach einem der Ansprüche 1-4, wobei das Durchführen (110) der dreidimensionalen Simulation außerdem Folgendes umfasst:
Präsentieren der relativen Bewegungsbahn der Fahrzeuge (210, 220) auf der Straße (230) in Form eines dynamischen Bildes.

6. System zum Steuern eines Fahrzeugs, das Folgendes umfasst:
einen Cloudserver (200), der dazu ausgelegt ist, auf Basis von in Echtzeit gesammelten Informationen eines gesteuerten Fahrzeugs (210) und Informationen von umgebenden Fahrzeugen (220) eine dreidimensionale Simulation an tatsächlichen Fahrbedingungen von Fahrzeugen (210, 220) in einem vorbestimmten Bereich durchzuführen (110), wobei die Informationen des gesteuerten Fahrzeugs (210) und die Informationen der umgebenden Fahrzeuge (220) von einer Vielzahl von Repeatern (1, 2,..., N), die entlang einer Straße (230) verteilt sind, vom gesteuerten Fahrzeug (210) bzw. von den umgebenden Fahrzeugen (220) empfangen und von den Repeatern (1, 2,..., N) zum Cloudserver (200) hochgeladen werden, wobei die Informationen des gesteuerten Fahrzeugs (210) mindestens Informationen zu Geschwindigkeit, Fahrzeugort, Fahrtrichtung und Ziel sowie die dreidimensionalen Informationen des gesteuerten Fahrzeugs (210) beinhalten und die Informationen der umgebenden Fahrzeuge (220) mindestens Informationen zu Fahrzeugort, Fahrtrichtung und Geschwindigkeit der umgebenden Fahrzeuge (220) in einem vorbestimmten Bereich des gesteuerten Fahrzeugs (210) sowie die dreidimensionalen Informationen der umgebenden Fahrzeuge (220) beinhalten; Steuerinformationen für Entscheidungen bei einer Fahrsimulation am gesteuerten Fahrzeug (210) gemäß der dreidimensionalen Simulation an der Fahrbedingung der Fahrzeuge (210, 220) zu erzeugen (120) und Steuerinformationen an ein fahrzeuginternes automatisches Fahrsystem des gesteuerten Fahrzeugs (210) zu senden (130), um das gesteuerte Fahrzeug (210) synchron zu steuern, um gemäß den gesendeten Steuerinformationen zu fahren.

7. System nach Anspruch 6, wobei die Steuerinformationen mindestens eine Art von Informationen von Fahrzeuggeschwindigkeit, Fahrzeugort und Fahrtrichtung des gesteuerten Fahrzeugs beinhalten, die während der dreidimensionalen Simulation erzeugt werden.

8. System nach Anspruch 6, wobei der Cloudserver (200) ferner dazu ausgelegt ist, eine dreidimensionale Simulation an der tatsächlichen Stra0enbedingung und der Fahrbedingung von Fahrzeugen (210, 220) im vorbestimmten Bereich durchzuführen und das dreidimensionale Modell des gesteuerten Fahrzeugs (210) zu steuern, um auf einer simulierten Straße zu fahren.

9. System nach Anspruch 8, wobei der Cloudserver (200) ferner dazu ausgelegt ist, ein gesamtes Verkehrsvolumen der Straße (230) gemäß der dreidimensionalen Simulation der tatsächlichen Straßenbedingung zu bestimmen und eine Fahrgeschwindigkeit des gesteuerten Fahrzeugs (210) zu steuern und/oder eine Fahrtroute des gesteuerten Fahrzeugs (210) zu planen.

10. System nach einem der Ansprüche 6-9, wobei der Cloudserver (200) ferner dazu ausgelegt ist, die relative Bewegungsbahn der Fahrzeuge (210, 220) auf der Straße (230) in Form eines dynamischen Bildes zu präsentieren.

11. System nach Anspruch 6, das außerdem Folgendes umfasst:
eine Vielzahl von Drucksensoren, die auf der Straße (230) positioniert und dazu ausgelegt sind, die Orte von Fahrzeugen (210, 220), die auf der Straße (230) fahren, zu messen, wobei
die Vielzahl von Drucksensoren mit mindestens einem der Repeater (1, 2,..., N) verbunden sind und die gemessenen Ortsinformationen der Fahrzeuge (210, 220) über die Repeater (1, 2,..., N) zum Cloudserver (200) übertragen werden.

## Revendications

1. Procédé de commande d'un véhicule (210), comprenant les étapes consistant à :
réaliser (110), par un serveur en nuage (200), une simulation tridimensionnelle sur des conditions réelles de conduite de véhicules (210, 220) dans une zone prédéterminée sur la base d'informations collectées en temps réel d'un véhicule commandé (210) et d'informations de véhicules environnants (220), les informations du véhicule commandé (210) et les informations des véhicules environnants (220) étant reçues respectivement en provenance du véhicule commandé (210) et des véhicules environnants (220) par une pluralité de répéteurs (1, 2,..., N) répartis le long d'une route (230) et téléchargées à partir des répéteurs (1, 2,..., N) sur le serveur en nuage (200), les informations du véhicule commandé (210) comprenant au moins des informations de vitesse, de localisation de véhicule, de direction de conduite et de destination ainsi que les informations tridimensionnelles du véhicule commandé (210), et les informations des véhicules environnants (220) comprenant au moins des informations de localisation de véhicule, de direction de conduite et de vitesse desdits véhicules environnants (220) dans une zone prédéterminée du véhicule commandé (210) ainsi que les informations tridimensionnelles desdits véhicules environnants (220) ;
générer (120), par le serveur en nuage (200), des informations de commande concernant des décisions dans la simulation de conduite sur le véhicule commandé (210) selon la simulation tridimensionnelle sur la condition de conduite des véhicules (210, 220) ; et
envoyer (130) les informations de commande à un système embarqué de conduite automatique du véhicule commandé (210) pour commander de manière synchrone la conduite du véhicule commandé (210) selon les informations de commande envoyées.

2. Procédé selon la revendication 1, dans lequel les informations de commande comprennent au moins un type d'informations parmi les informations de vitesse de véhicule, de localisation de véhicule et de direction de conduite du véhicule commandé (210) générées au cours de la simulation tridimensionnelle.

3. Procédé selon la revendication 1, dans lequel la réalisation (110) de la simulation tridimensionnelle comprend les étapes consistant à :
réaliser une simulation tridimensionnelle sur la condition réelle de route et la condition de conduite de véhicules (210, 220) dans la zone prédéterminée ; et
commander la conduite du modèle tridimensionnel du véhicule commandé (210) sur une route simulée.

4. Procédé selon la revendication 3, dans lequel la commande de la conduite du modèle tridimensionnel du véhicule commandé (210) sur une route simulée comprend les étapes consistant à :
déterminer un volume global de trafic sur la route (230) selon la simulation tridimensionnelle de la condition réelle de route et commander une vitesse de conduite du véhicule commandé (210) et/ou planifier un itinéraire de conduite du véhicule commandé (210).

5. Procédé selon l'une quelconque des revendications 1 à 4, dans lequel la réalisation (110) de la simulation tridimensionnelle comprend en outre l'étape consistant à :
présenter la trajectoire relative de déplacement sur la route (230) des véhicules (210, 220) sous la forme d'une image dynamique.

6. Système de commande de véhicule, comprenant :
un serveur en nuage (200), qui est configuré pour réaliser (110) une simulation tridimensionnelle sur des conditions réelles de conduite de véhicules (210, 220) dans une zone prédéterminée sur la base d'informations collectées en temps réel d'un véhicule commandé (210) et d'informations de véhicules environnants (220), les informations du véhicule commandé (210) et les informations des véhicules environnants (220) étant reçues respectivement en provenance du véhicule commandé (210) et des véhicules environnants (220) par une pluralité de répéteurs (1, 2,..., N) répartis le long d'une route (230) et téléchargées à partir des répéteurs (1, 2,..., N) sur le serveur en nuage (200), les informations du véhicule commandé (210) comprenant au moins des informations de vitesse, de localisation de véhicule, de direction de conduite et de destination ainsi que les informations tridimensionnelles du véhicule commandé (210), et les informations des véhicules environnants (220) comprenant au moins des informations de localisation de véhicule, de direction de conduite et de vitesse desdits véhicules environnants (220) dans une zone prédéterminée du véhicule commandé (210) ainsi que les informations tridimensionnelles desdits véhicules environnants (220) ; pour générer (120) des informations de commande concernant des décisions dans la simulation de conduite sur le véhicule commandé (210) selon la simulation tridimensionnelle sur la condition de conduite des véhicules (210, 220) ; et pour envoyer (130) les informations de commande à un système embarqué de conduite automatique du véhicule commandé (210) pour commander de manière synchrone la conduite du véhicule commandé (210) selon les informations de commande envoyées.

7. Système selon la revendication 6, dans lequel les informations de commande comprennent au moins un type d'informations parmi les informations de vitesse de véhicule, de localisation de véhicule et de direction de conduite du véhicule commandé générées au cours de la simulation tridimensionnelle.

8. Système selon la revendication 6, dans lequel le serveur en nuage (200) est en outre configuré pour réaliser une simulation tridimensionnelle sur la condition réelle de route et la condition de conduite de véhicules (210, 220) dans la zone prédéterminée et pour commander la conduite du modèle tridimensionnel du véhicule commandé (210) sur une route simulée.

9. Système selon la revendication 8, dans lequel le serveur en nuage (200) est en outre configuré pour déterminer un volume global de trafic sur la route (230) selon la simulation tridimensionnelle de la condition réelle de route et pour commander une vitesse de conduite du véhicule commandé (210) et/ou pour planifier un itinéraire de conduite du véhicule commandé (210).

10. Système selon l'une quelconque des revendications 6 à 9, dans lequel le serveur en nuage (200) est en outre configuré pour présenter la trajectoire relative de déplacement sur la route (230) des véhicules (210, 220) sous la forme d'une image dynamique.

11. Système selon la revendication 6, comprenant en outre :
une pluralité de capteurs de pression, qui sont positionnés sur la route (230) et qui sont configurés pour mesurer les localisations de véhicules (210, 220) circulant sur la route (230),
la pluralité de capteurs de pression étant connectés à au moins un des répéteurs (1, 2,..., N), et les informations de localisation mesurées des véhicules (210, 220) étant transmises au serveur en nuage (200) par l'intermédiaire des répéteurs (1, 2,..., N) .
